# EUROPÄISCHE PATENTSCHRIFT

(11) **EP 0 905 486 B1**
(45) Veröffentlichungstag und Bekanntmachung des Hinweises auf die Patenterteilung: **25.06.2003**
(21) Anmeldenummer: 98115789.4
(22) Anmeldetag: 21.08.1998
(51) Int. Cl.: G01D 5/347

(54) **Linearlager mit einer Einrichtung zum Messen**
Linear bearing with a measuring device
Palier linéaire avec un dispositif de mesure

(30) Priorität: 24.09.1997 DE 19742081
(43) Veröffentlichungstag der Anmeldung: 31.03.1999
(73) Patentinhaber: INA-Schaeffler KG, 91074 Herzogenaurach (DE)
(72) Erfinder: Moseberg, Ralf, 66862 Kindsbach (DE); Rudy, Dietmar, 66501 Kleinbundenbach (DE); Wiemer, Matthias, 97440 Schleerieht (DE)

(56) Entgegenhaltungen:
- EP-A- 0 209 513
- WO-A-91/16594
- DE-A- 3 508 143
- DE-A- 4 306 951
- US-A- 3 675 331
- PATENT ABSTRACTS OF JAPAN vol. 006, no. 159 (P-136), 20. August 1982 (1982-08-20) -& JP 57 077903 A (MITSUTOYO MFG CO LTD), 15. Mai 1982 (1982-05-15)

## Beschreibung

### Gebiet der Erfindung

Die Erfindung betrifft ein Linearlager mit einer Einrichtung zum Messen des von einem beweglichen Führungswagen gegenüber einer festen, geradlinigen Führungsschiene zurückgelegten Weges, welche einen der Führungsschiene zugeordneten Maßstab und einen an dem Führungswagen angeordneten Meßkopf mit einem Sensor aufweist, der für die berührende oder berührungslose Abtastung des Maßstabs vorgesehen ist, wobei der Führungswagen eine zu dem Maßstab hin offene Ausnehmung aufweist, in welcher der Meßkopf angeordnet ist.

### Hintergrund der Erfindung

Ein solches Lager dient der Integration der Funktion "Messen" in die Funktion "Führen". Damit kann also mit einer Linearführung die Messung des Weges durchgeführt werden, den das eine Lagerteil in bezug auf das andere Lagerteil zurücklegt.

In Profilschienenführungen integrierte Meßsysteme entsprechen bereits dem Stand der Technik. Ein Linearlager der eingangs genannten Art mit einer Wegmeßeinrichtung ist aus der internationalen Patentanmeldung mit der Veröffentlichungsnummer WO 91/16 594 bekannt. Dieses ist als Wälzlager ausgebildet, wobei das bewegliche, den Meßbereich mit dem Sensor enthaltende Lagerteil Rollenumlaufeinheiten aufweist und das feste Lagerteil eine Führungsschiene ist, an welcher das bewegliche Lagerteil über tragende Rollen der Rollenumlaufeinheiten abgestützt ist. Die Maßverkörperung an der Führungsschiene ist als optischer oder magnetischer Maßstab in eine Nut eingesetzt, die sich an der Oberseite der Führungsschiene befindet. Denkbar ist auch ein Meßsystem, das nach einem kapazitiven oder induktiven Meßprinzip arbeitet. Der Meßkopf des bekannten Lagers ist in einem separaten Gehäuse angeordnet, welches an einer in Fahrtrichtung weisenden Stirnseite des beweglichen Lagerteils befestigt ist.

Diese Ausführung hat den Nachteil, daß in Fahrt- bzw. Längsrichtung ein größerer Bauraum für das bewegliche Lagerteil erforderlich ist, als bei einem Linearlager ohne Meßeinrichtung. Außerdem benötigt das Gehäuse separate Dichtungen, was zusätzliche Material-, Werkzeug- und Montagekosten zur Folge hat. Schließlich verursacht ein solches Gehäuse zusätzliche Herstellkosten.

Das Prinzip eines Linearlagers mit einer Führungsschiene und einem dieser zugeordneten Maßstab, sowie mit einem längs der Führungsschiene bewegbaren Führungswagen mit einem Meßkopf ist auch aus dem Dokument DE 35 08 143 A bereits bekannt. Über die genaue Anordnung des Meßkopfes an dem Führungswagen sind dieser Druckschrift nähere Informationen jedoch nicht zu entnehmen.

Aus dem Dokument JP 57 077 903 A ist ein Linearlager der eingangs genannten Art bekannt, bei welchem eine Führungsschiene innerhalb eines Gehäuses von zwei Maßstäben entfernt angeordnet und über eine Blattfeder mit einem Führungswagen verbunden ist, welcher mit seinem Meßkopf die Maßstäbe berührungslos abtasten kann. Bei dieser Ausführung besteht jedoch der Nachteil, dass rechtwinklig zur Längsrichtung der Führungsschiene und der Maßstäbe ein großer Bauraum erforderlich ist, da der Führungswagen die Führungsschiene nicht umgibt, sondern von dieser in einem seitlichen Abstand angeordnet ist.

Der Meßkopf kann an dem Führungswagen innerhalb der Nut durch Verkleben, durch mechanisches Verklemmen oder Vergießen mit einem flüssigen aushärtbaren Füllstoff befestigt sein. Bei jeder dieser Möglichkeiten ergibt sich eine sehr steife Befestigung des Meßkopfes in dem Führungswagen.

Der Führungswagen kann eine die Nut nach außen zusätzlich öffnende Bohrung aufweisen, in welcher ein Anschlußkabel für den Meßkopf angeordnet ist.

### Kurze Beschreibung der Zeichnungen

Ein Ausführungsbeispiel der Erfindung ist in den Zeichnungen dargestellt und wird im folgenden näher beschrieben. Es zeigen
- Figur 1: ein gattungsgemäßes, vorbekanntes Linearlager in einer perspektivischen Darstellung, wobei der Lagerbereich und der Meßbereich aufgebrochen dargestellt sind;
- Figur 2: ein erfindungsgemäßes Linearlager in einer Draufsicht;
- Figur 3: das bewegliche Teil des Lagers gemäß Figur 2 in einer stirnseitigen Ansicht.

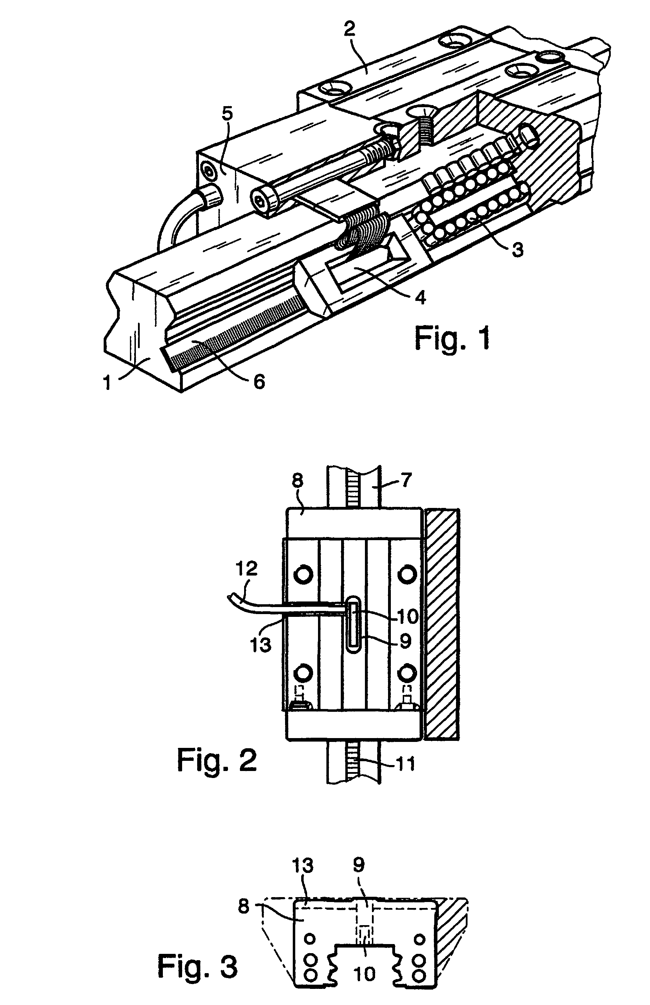

Bei einem vorbekannten Lager gemäß Figur 1, welches eine Führungsschiene 1, einen diese umgreifenden Führungswagen 2 und Rollenumläufe 3 enthält, über welche der Führungswagen 2 an der Führungsschiene 1 längsverschieblich abgestützt ist, befindet sich ein Meßkopf 4 in einem separaten Gehäuse 5, welches an dem Führungswagen 2 stirnseitig angeschraubt ist und dadurch die Gesamtlänge des mit der Meßvorrichtung versehenen Führungswagens 2 vergrößert. Während der Verschiebung des Führungswagens 2 längs der Führungsschiene 1 bewegt sich der Meßkopf 4 an einem Maßstab 6 entlang, der an einer Längsseite der Führungsschiene 1 angebracht, beispielweise dort in einer Nut eingelegt ist.

Bei einem erfindungsgemäßen Linearlager entsprechend den Figuren 2 und 3 ist ein separates Gehäuse zur Aufnahme des Meßkopfes nicht erforderlich. Hier weist der die Führungsschiene 7 umgebende Führungswagen 8 eine durchgehende zentrale Nut 9 auf, in welcher der Meßkopf 10 untergebracht ist. Er befindet sich in unmittelbarer Nähe eines Maßstabs 11, der an der Oberseite der Führungsschiene 7 befestigt ist. Während der Bewegung des Führungswagens 8 längs der Führungsschiene 7 überstreicht daher der Meßkopf 10 berührungslos den Maßstab 11 und erhält von diesem seine Meßwerte, die er über ein Anschlußkabel 12 als elektrische Signale an eine Auswertestation weiterleitet. Zur Aufnahme des Anschlußkabels 12 weist der Führungswagen 8 eine quer zur Führungsschiene 7 verlaufende Bohrung 13 auf, über welche die Nut 9 zusätzlich nach außen geöffnet ist.

### Bezugszahlenliste

- 1: Führungsschiene
- 2: Führungswagen
- 3: Rollenumlauf
- 4: Meßkopf
- 5: Gehäuse
- 6: Maßstab
- 7: Führungsschiene
- 8: Führungswagen
- 9: Nut
- 10: Meßkopf
- 11: Maßstab
- 12: Anschlußkabel
- 13: Bohrung

## Patentansprüche

1. Linearlager mit einer Einrichtung zum Messen des von einem beweglichen Führungswagen (8) gegenüber einer festen, geradlinigen Führungsschiene (7) zurückgelegten Weges, welche einen der Führungsschiene (7) zugeordneten Maßstab (11) und einen an dem Führungswagen (8) angeordneten Meßkopf (10) mit einem Sensor aufweist, der für die berührende oder berührungslose Abtastung des Maßstabs (11) vorgesehen ist, wobei der Führungswagen (8) eine zu dem Maßstab (11) hin offene Ausnehmung aufweist, in welcher der Meßkopf (10) angeordnet ist, **dadurch gekennzeichnet, dass** der Maßstab (11) an einer Längsseite der Führungsschiene (7) angeordnet und der Führungswagen (8) die Führungsschiene (7) teilweise umgreifend ausgebildet ist, wobei die Ausnehmung eine an dem Führungswagen (8) angeordnete, zentrale, durchgehende Nut (9) ist, innerhalb welcher der Meßkopf (10) an dem Führungswagen (8) befestigt ist.

2. Linearlager nach Anspruch 1, **dadurch gekennzeichnet, daß** der Meßkopf (10) an dem Führungswagen (8) innerhalb der Nut (9) durch Verkleben befestigt ist.

3. Linearlager nach Anspruch 1, **dadurch gekennzeichnet, daß** der Meßkopf (10) an dem Führungswagen (8) innerhalb der Nut (9) durch mechanisches Verklemmen befestigt ist.

4. Linearlager nach Anspruch 1, **dadurch gekennzeichnet, daß** der Meßkopf (10) an dem Führungswagen (8) innerhalb der Nut (9) durch Vergießen mit einem flüssigen aushärtenden Füllstoff befestigt ist.

5. Linearlager nach Anspruch 1, **dadurch gekennzeichnet, daß** der Führungswagen (8) eine die Nut (9) nach außen öffnende Bohrung (13) aufweist, in welcher ein Anschlußkabel (12) für den Meßkopf (10) angeordnet ist.

## Claims

1. Linear bearing having a device for measuring the distance travelled by a movable guide carriage (8) relative to a stationary, straight guide rail (7), said device comprising a ruler (11) associated to the guide rail (7) and a measuring head (10) that is arranged on the guide carriage (8) and possesses a sensor for contact or non-contact scanning of the ruler (11), the guide carriage (8) comprising a recess that is open towards the ruler (11), in which recess the measuring head (10) is arranged, **characterised in that** the ruler (11) is arranged on a long side of the guide rail (7), and the guide carriage (8) is configured to partially surround the guide rail (7), the recess is a central, continuous groove (9) arranged on the guide carriage (8), and the measuring head (10) is fixed within the groove (9) on the guide carriage (8).

2. Linear bearing according to claim 1, **characterised in that** the measuring head (10) is fixed within the groove (9) on the guide carriage (8) by gluing.

3. Linear bearing according to claim 1, **characterised in that** the measuring head (10) is fixed within the groove (9) on the guide carriage (8) by mechanical clamping.

4. Linear bearing according to claim 1, **characterised in that** the measuring head (10) is fixed within the groove (9) on the guide carriage (8) by casting with a liquid, hardenable filler material.

5. Linear bearing according to claim 1, **characterised in that** the guide carriage (8) comprises a bore (13) which opens the groove (9) towards the outside, in which bore (13) a connecting cable (12) for the measuring head (10) is arranged.

## Revendications

1. Roulement linéaire ayant un dispositif pour mesurer la distance parcourue par un chariot de guidage (8) mobile par rapport à un rail fixe de guidage (7) de forme rectiligne, ledit dispositif comprenant une règle graduée (11), associée au rail de guidage (7), et une tête de mesure (10) agencée sur le chariot de guidage (8) et munie d'un palpeur qui sert à palper, avec ou sans contact, la règle graduée (11), ledit chariot de guidage (8) comprenant un évidement qui est ouvert vers la règle graduée et dans lequel est agencée la tête de mesure (10), **caractérisé en ce que** la règle graduée (11) est agencée sur un grand côté du rail de guidage (7), et le chariot de guidage (8) est configuré de manière à entourer partiellement le rail de guidage (7), et l'évidement est réalisé sous la forme d'une rainure (9) centrale, continue agencée sur le chariot de guidage (8), la tête de mesure (10) étant fixée à l'intérieur de la rainure (9) sur le chariot de guidage (8).

2. Roulement linéaire selon la revendication 1, **caractérisé en ce que** la tête de mesure (10) est fixée à l'intérieur de la rainure (9) sur le chariot de guidage (8) par collage.

3. Roulement linéaire selon la revendication 1, **caractérisé en ce que** la tête de mesure (10) est fixée à l'intérieur de la rainure (9) sur le chariot de guidage (8) par serrage mécanique.

4. Roulement linéaire selon la revendication 1, **caractérisé en ce que** la tête de mesure (10) est fixée à l'intérieur de la rainure (9) sur le chariot de guidage (8) par coulage avec une matière de remplissage liquide et durcissable.

5. Roulement linéaire selon la revendication 1, **caractérisé en ce que** le chariot de guidage (8) comprend un alésage (13) qui ouvre la rainure (9) vers l'extérieur, dans lequel alésage (13) est agencé un câble de raccordement (12) pour la tête de mesure (10).
